# EUROPEAN PATENT APPLICATION

(11) **EP 4 787 203 A1**
(43) Date of publication of application: **05.08.2026**
(21) Application number: 26152887.1
(22) Date of filing: 20.01.2026
(51) Int. Cl.: G06F 21/31, G06F 21/42, G06F 21/44, G06F 21/55, G06F 21/62, H04L 9/40, G06Q 20/40

(54) **INCIDENT RESPONSE SYSTEM WITH A MODULAR FRAMEWORK FOR REAL-TIME CONTEXTUAL INTERACTION AND VERIFICATION**

(30) Priority: 30.01.2025 US 202519040981
(71) Applicant: Skyhawk Security, Ramat Gan (IL)
(72) Inventor: BURSHAN, Chen, 8506015 Omer (IL); SHAHAR, Asaf, 4428158 Kfar Saba (IL)
(74) Representative: Kancelaria Eupatent.pl Sp. z o.o.

(57) **Abstract**

Computerized methods and systems for real-time verification of suspicious activity are described. Indications of suspicious activity from user actions or machineinitiated actions are received. Principal users are determined for interaction. Verification processes are conducted with the principal users through secure multifactor channels. Actions are then performed based on the verification process. The actions can include logging of suspicious activity as legitimate or security actions.

## Description

### TECHNICAL FIELD

The present disclosure relates to cybersecurity systems and incident response mechanisms.

### BACKGROUND OF THE DISCLOSURE

In the modem digital age, cybersecurity has become a critical concern for organizations and enterprises. With the increasing reliance on digital systems and the internet, the threat landscape has expanded, making it imperative for organizations and enterprises to protect their data and systems from unauthorized access and cyber threats. Cybersecurity threat detection systems and incident response systems are essential tools that help organizations detect, respond to, and recover from security incidents. These systems are designed to identify suspicious activities, mitigate potential threats, and ensure the integrity and confidentiality of sensitive information.

One of the significant challenges in cybersecurity is the verification of activities initiated by both users and automated systems. User activities, such as logins and access to resources, need to be monitored to prevent unauthorized activity. Similarly, actions originating from computerized entities, such as virtual machines and container instances, require verification to ensure they are not compromised. However, there may be instances in which legitimate activities performed by users and/or legitimate activities originating from computerized entities are perceived as suspicious activities by threat detection systems, which can trigger an unwanted incident response.

### SUMMARY OF THE DISCLOSURE

The present disclosed subject matter, also referred to herein as the disclosure, includes systems, methods, and computer program products for modular frameworks that enable real-time principal user interaction with incident response systems to support multiple use cases, including verification of suspicious activities, execution of response actions, and operational approvals.

Embodiments of the present disclosure are directed to a method that comprises: receiving an indication of suspicious activity associated with a computerized asset; determining a principal user for interaction, if the suspicious activity is a result of an action associated with the computerized asset that is initiated by a human user, the human user is determined to be the principal user, and if the suspicious activity is a result of an action associated with the computerized asset that originates from a computerized entity, a human user identified as being responsible for the computerized entity is determined to be the principal user, identification of the human user responsible for the computerized entity is performed based on a mapping process that dynamically associates one or more computerized entities with one or more respective responsible users; conducting, through one or more verification channels, a verification process with the determined principal user to assess legitimacy of the suspicious activity; and based on the verification process, logging the suspicious activity as legitimate or initiating at least one security action.

Optionally, the method further comprises: logging the suspicious activity as a cybersecurity incident.

Optionally, the at least one security action includes: escalating the suspicious activity to a cybersecurity incident responder for further review and action.

Optionally, the at least one security action includes one or more of: disabling accounts, stopping processes, isolating automated processes, or quarantining the computerized entity.

Optionally, conducting the verification process includes: sending a request to the determined principal user to verify whether the suspicious activity is legitimate, and responsive to sending the request, receiving from the determined principal user an indication of whether the suspicious activity is legitimate.

Optionally, a lack of reply from the determined principal user within a predetermined period of time after sending the request is defined as a denial from the determined principal user that the suspicious activity is legitimate.

Optionally, the one or more communication channels includes one or more of: email, chat platforms, or mobile applications.

Optionally, the method further comprises: integrating contextual data to guide a workflow for performing the at least one action.

Optionally, the workflow includes an automated flow.

Optionally, the workflow includes a human-assisted flow.

Optionally, the action associated with the computerized asset that is initiated by a human user includes one or more of user logins or user access to resources.

Optionally, the computerized entity includes one or more of: automated processes, virtual machines, servers, container instances, or APIs.

Embodiments of the present disclosure are directed to a computer system. The computer system comprises: a non-transitory storage medium that stores computer components; and a computerized processor configured to execute the computer components. The computer components comprise: an activity indication module configured to receive an indication of suspicious activity associated with a computerized asset, a user determination module configured to determine a principal user for interaction, if the suspicious activity is a result of an action associated with the computerized asset that is initiated by a human user, the user determination module determines that the human user is the principal user, and if the suspicious activity is a result of an action associated with the computerized asset that originates from a computerized entity, the user determination module determines that a human user identified as being responsible for the computerized entity is determined to be the principal user, identification of the human user responsible for the computerized entity is performed based on a mapping process that dynamically associates one or more computerized entities with one or more respective responsible users, a verification module configured to conduct, through one or more verification channels, a verification process with the determined principal owner to assess legitimacy of the suspicious activity, and a responsive action module configured to, based on the verification process, log the suspicious activity as legitimate or initiate at least one security action.

Embodiments of the present disclosure are directed to a method that comprises: receiving an indication of suspicious activity associated with a computerized asset; determining a principal user for interaction, if the suspicious activity is a result of an action associated with the computerized asset that is initiated by a human user, the human user is determined to be the principal user, and if the suspicious activity is a result of an action associated with the computerized asset that originates from a computerized entity, a human user identified as being responsible for the computerized entity is determined to be the principal user; conducting, through one or more verification channels, a verification process with the determined principal user to assess legitimacy of the suspicious activity; and based on the verification process, logging the suspicious activity as legitimate or initiating a responsive workflow selected from a set of two workflows, the set of two workflows includes an automated workflow and a human-assisted workflow.

This document references terms that are used consistently or interchangeably herein. These terms, including variations thereof, are as follows:
A "computer" includes machines, computers and computing or computer systems (for example, physically separate locations or devices), servers, computer and computerized devices, processors, processing systems, computing cores (for example, shared devices), virtual machines (VMs), containers, and similar systems, workstations, modules and combinations of the aforementioned. The aforementioned "computer" may be in various types, such as servers, virtual machines, containers, a personal computer (e.g. laptop, desktop, tablet computer), or any type of computing device, including mobile devices that can be readily transported from one location to another location (e.g. smartphone, personal digital assistant (PDA), mobile telephone or cellular telephone).

A "computerized asset" can include, for example, a piece of hardware including any computer or computing device, in accordance with the "computer" defined above, as well as a cloud service hosted by such hardware. Accordingly, such hardware may be part of a cloud infrastructure/network for supporting cloud services or part of a traditional (non-cloud) environment. Within the context of this document, a computerized asset can also include assets that are neither hardware nor cloud services, including assets that are run / executed or stored on hardware. Examples of such assets include, but are not limited to, executable software, computer processes that are executed from program calls or software executions, file systems, databases, applications, user groups, and the like

Unless otherwise defined herein, all technical and/or scientific terms used herein have the same meaning as commonly understood by one of ordinary skill in the art to which the disclosure pertains. Although methods and materials similar or equivalent to those described herein may be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the present disclosure are herein described, by way of example only, with reference to the accompanying drawings. With specific reference to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

Attention is now directed to the drawings, where like reference numerals or characters indicate corresponding or like components. In the drawings:
FIG. 1 is a diagram of an architecture of an exemplary incident response system that includes, is configured as, or is communicatively coupled with, a modular framework that enables real-time principal user interaction with the incident response system, according to embodiments of the present disclosure;
FIG. 2 is a flow diagram illustrating a process for real-time verification that can be performed by the system of FIG. 1, according to embodiments of the present disclosure; and
FIG. 3 is a security incident response flow diagram that can be performed by the system of FIG. 1, according to embodiments of the present disclosure.

### DESCRIPTION OF THE PREFERRED EMBODIMENTS

The present disclosure is directed to systems, methods, and computer program products for modular frameworks that enable real-time principal user interaction with incident response systems.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the examples. The disclosure is capable of other embodiments or of being practiced or carried out in various ways.

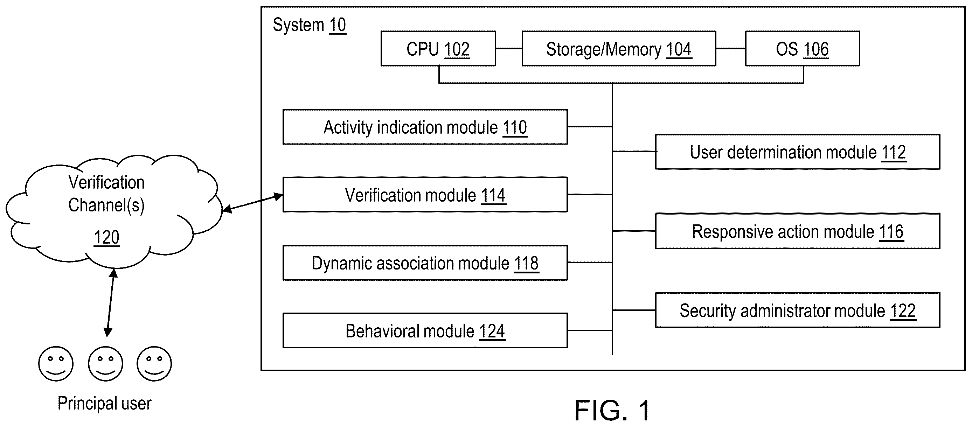

Referring now to the drawings, FIG. 1 illustrates as an architecture an incident response system (hereinafter referred to interchangeably as "system"), generally designated **10,** according to non-limiting embodiments of the present disclosure. The system **10** provides logic and logic functions for the disclosure. Generally speaking, the system **10** is configured to receive indications of suspicious activities associated (i.e., performed in association) with computerized assets, determine principal users for interaction in regards to the suspicious activities, conduct verification processes with the determined principal users to assess legitimacy of the suspicious activities, and perform response actions based on whether the determined principal users confirm or deny the legitimacy of the activities. The suspicious activities can involve human users and/or computerized (i.e., workload) entities (i.e., human and non-human identities). For example, if a suspicious activity is a result of an action initiated by a human user, that human user may be determined to be the principal user, and if a suspicious activity is a result of an action that originated from a computerized entity (such as a server, container instance, virtual machine, API, etc.), a human user identified as being responsible for the computerized entity is determined to be the principal user. In certain embodiments, the identification of such a responsible user is based on a policy-based mapping process that dynamically associates one or more computerized entities with one or more respective responsible users.

The indicated suspicious activities relate to actions or activities that are viewed or defined by a threat detection system (which may be a part of the system **10** or may otherwise be associated with the system **10**) as anomalous or risky activities, but which may in fact be benign activities. For example, a human user that attempts to login to a service or account that he or she typically does not access (but may have valid credentials for), may trigger an alert at the threat detection system. This attempted login may in fact be benign, but the threat detection system may view it as suspicious, especially if combined with other risky activities. As another example, a cloud service server may access one or more source databases and one or more target databases during a database migration process. The number and frequency of the database accesses by the cloud service server may fall outside of nominal behavioral patterns, and therefore, although the accesses are benign, the threat detection system may view the accesses as suspicious. The embodiments of the present disclosure provide mechanisms for allowing verification of such anomalous / risky activities via interaction with principal users.

In certain embodiments, the system **10** includes, is configured as, or is communicatively coupled with, a modular framework that enables real-time principal user interaction with the system **10** so as to support multiple use cases, including verification of suspicious activities, execution of response actions, and operational approvals.

The system **10** includes a central processing unit (CPU) **102** formed from one or more processors. The processors may be, for example, conventional processors, such as those used in servers, computers, and other computerized devices. For example, the processors may include x86 Processors from AMD and Intel, Xeon^{®} and Pentium^{®} processors from Intel, as well as any combinations thereof.

The CPU **102** is electronically coupled (connected) to a storage/memory **104** for storing machine executable instructions, executable by the CPU **102,** for performing the processes of the system **10,** as will be detailed in subsequent sections of the present disclosure. The storage/memory **104,** although shown as a single component for representative purposes, may be multiple components. The CPU **102** is also electronically coupled (connected), either directly or indirectly, to various modules (computer components) that are configured to perform the various logic functions of the disclosure. The CPU **102** is further electronically coupled (connected) to an operating system (OS) **106** that may load machine executable instructions, stored in the storage/memory **104,** for execution by the CPU **102.** The OS **106** may include any of the conventional computer operating systems, such as those available from Microsoft of Redmond Washington, commercially available as Windows^{®} OS, such as Windows^{®} 10, Windows^{®} 7, MAC OS from Apple of Cupertino, CA, or Linux, or may include real-time operating systems, or may include any other type of operating system typically deployed in sandboxed systems as known in the art.

The following paragraphs describe the various modules (computer components) of the system **10** that are configured to perform the various logic functions of the invention. The system **10** includes software, software routines, computer program code, computer program code segments and the like, embodied, for example, in computer components, modules and the like. According to certain embodiments, these computer components, modules and the like of the system **10** generally include an activity indication module **110,** a principal user determination module **112,** a verification module **114,** and a responsive action module **116.** In certain embodiments one or more additional modules may be included, including a dynamic association module **118,** a security administrator module **122,** and a behavioral module **124.**

The activity indication module **110** is configured to receive indications of suspicious activities performed in association with computerized assets of an organization, enterprise, cloud or other similar environment. In certain embodiments, the activity indication module **110** may receive indications of suspicious activity from a threat detection system (that may or may not be part of the system **10**) that is configured to monitor computerized assets so as to detect, based on activities associated with the computerized assets, threat events and suspicious activity (that may develop into threat events). In other embodiments, the activity indication module **110** may also perform the functions of such a threat detection system, thereby being configured to detect threat events and suspicious activity.

Indications of suspicious activity may be triggered by various actions, some of which may be human user-initiated actions whereas others may be actions that originate from a computerized entity (workload entity). Suspicious activity triggered by human user actions can include, for example, a user login, a user access (or request for access) to a computerized resources, access to a cloud service or entity, and the like. Suspicious activity that originates from a computerized entity can include, for example, a container instance exhibiting anomalous network activity, anomalous API usage, a computerized entity making configuration changes, unusual activity patterns of a computerized entity (e.g., server, VM, container instance, etc.), and the like.

The principal user determination module **112** (referred to interchangeably herein as "user determination module") is configured to determine a principal user with which the system **10** will interact for verification purposes in regards to the suspicious activities indicated by the activity indication module **110.** The modularity of the system **10** (provided by the modular framework) enables the user determination module **112** to determine the principal user for both cases in which the suspicious activity is in response to human user-initiated actions as well as actions that originate from computerized entities.

For cases in which the suspicious activity is in response to a human user-initiated action, the user determination module **112** determines that the principal user is the human user that initiated the action that triggered the indication of suspicious activity. For example, if a particular human user performed a suspicious login (or login attempt), the user determination module **112** determines that the particular human user is the principal user. This determination can be performed in various ways and based on various information. For example, the user determination module **112** may perform a user look-up or user check, for example checking system log records associated with the computerized asset with which the suspicious activity is associated to identify the human user that performed the activity that triggered the indication.

For cases in which the suspicious activity is in response to an action (or actions) that originated from a computerized entity, the user determination module **112** determines that a human user, identified as being responsible for the computerized entity, is the principal user. In certain embodiments, the identification of such a responsible human user is based on a mapping process that dynamically associates one or more computerized entities with one or more respective responsible human users. This mapping ensures accurate identification of the principal user for interaction in cybersecurity events (in regards to the indicated suspicious activity).

In certain embodiments, the dynamic association module **118** is configured to perform the mapping process to dynamically associate one or more computerized entities with one or more respective responsible human users. Such responsible users (persons) can include, for example, DevOps team members, developers, IT personnel, and the like. The dynamic association module **118** may dynamically associate a computerized entity with a responsible person using various systems, tools and techniques, including, for example, using IAM systems which provide a linking of resources with specific accounts or roles, resource tagging (for example using metadata to identify ownership or management), configuration management tools to trace workload entities to deployment ownership, and policies (e.g., tags, names, accounts, applications, etc.).

The verification module **114** is configured to conduct (perform) a verification process with the determined principal user (determined by the determination module **112**) in order to assess legitimacy of the suspicious activity indicated by the activity indication module **110.** The verification process, performed by the verification module **114,** is conducted through one or more verification channels **120.** The verification channel(s) may be, for example, communication channels, which can include, but are not limited to, mobile phone applications, email, messaging platforms (e.g., Slack from Salesforce of San Francisco, Teams from Microsoft, and the like), and web interfaces including secure portals for viewing and managing alerts and workflows. For example, a verification channel **120** may be implemented as a mobile phone application specifically designed for secure multi-factor and seamless interaction between users and the verification module **114.** Such mobile phone application may include, for example, push notifications for real-time alerts, in-app options to verify activities, approve requests, or execute response actions, and a streamlined interface for interacting with the modular framework, tailored for both principal users and security administrators.

The verification process can include multiple steps. In a first step, the verification module **114** may send (transmit), via the verification channel(s), a request to the determined principal user to verify (confirm or deny) whether the suspicious activity is legitimate. This verification request can be of various types, depending on the type of verification channel used by the verification module **114.** For example, for email verification channels, the verification request may be in the form of an email notification, which may include an actionable link for verification or response. In a second step, the verification module receives from the determined principal user, in response to the transmitted verification request, an indication of whether the suspicious activity is legitimate.

In one example the verification request may include a prompt directly asking the determined principal user if the suspicious activity is legitimate, and asking for a response from the principal user. The prompt may include pre-selected response options. As one example, particularly suitable for mobile phone application verification channels, the prompt may include pre-selected affirmative and negative response options. The affirmative response option may be, for example "Yes, it was me", and the negative response option may be, for example, "Report it".

In certain embodiments, the determined principal user is provided with a set (predetermined) time window for responding to the verification request. This time window (period of time) is measured from the time that the verification request was sent, and is typically on the order of a few minutes, for example within five minutes from the time the verification request is sent, but may be longer or shorter depending on various factors, such as, for example, the type of suspicious activity in question, the role of the determined principal user, and the like. In such embodiments, a lack of reply from the determined principal user within the predetermined period of time (measured from the moment the verification request was transmitted) is defined as a negative response, i.e., a denial from the determined principal user that the suspicious activity is legitimate.

The responsive action module **116** is configured to take actions based on the verification process, in particular the result of the verification process, including the type of reply received from determined principal user in response to the verification request. For example, if the principal user replies in the affirmative (i.e., confirms the legitimacy of the suspicious activity), the responsive action module **116** may log, or may instruct the threat detection system to log, the suspicious activity as legitimate (to prevent potential further alerts for the same identified activity), for example as a legitimate cybersecurity incident. On the other hand, if, for example, the principal user replies in the negative (i.e., denies that the suspicious activity is legitimate, or does not reply within the allocated period of time), the responsive action module **116** may trigger a response workflow selected from a set of two workflows. The first response workflow if is an automated flow, which includes automatic execution of predefined remediation actions, including, for example, disabling accounts, stopping processes, isolating automatic processes, isolating or quarantining workload entities including the entity for which the suspicious activity is associated, and the like. The second response workflow is a human-assisted workflow, which includes escalation of the confirmed suspicious activity to an incident response system or incident responder (e.g., cybersecurity incident responder) for further review and action.

It will be appreciated that the functions performed by the system **10** according to the embodiments of the disclosure provide dynamic means for verification and response, with tailored workflows for resolving threats or potential threats. Part of the dynamic aspect relies on the principal user determination and interaction, which allows for prompts (from the verification module **114**) to be addressed to the appropriate responsible person based on the specific use-case. For example, for the case in which the suspicious activity is in response to a human user-initiated action, the prompts sent by the verification module **114** may address suspicious activity tied to that human user's account. As another example, for cases in which the suspicious activity is in response to an action (or actions) that originated from a computerized entity, the prompts sent by the verification module **114** are routed to the person responsible for that computerized entity (based on the mapping provided by the dynamic association module). As one explicit non-limiting example, consider a case where the suspicious activity is in the form of a container exhibiting anomalous network activity. This suspicious activity will trigger the verification module **114** to send a prompt to the person responsible for the container, which may be a DevOps team member or engineer that manages the container's configuration. As another explicit non-limiting example, consider a case where an API is using a key. This suspicious activity (suspicious API key usage) will trigger the verification module **114** to send a prompt to the person responsible for the API, which may be a developer.

Another part of the dynamic aspect provided by the system **10** is role differentiation, which may differentiate between principal users (i.e., individuals responsible for verifying or responding to activities tied to their accounts or workloads, discussed in detail above) and security administrators. The system **10** may provide access and interaction with security administrators so as to allow security administrators to oversee interactions, review workflows, and intervene when necessary, including overriding or escalating unresolved threats to higher-level controls.

In certain embodiments, the security administrator oversight and interaction is provided by the security administrator module **122,** which is configured to provide security administrators with one or more tools that allow the security administrators to perform one or more tasks including, for example, oversight and intervention of workflows across users and workload entities, execution of multi-level verification for high-risk operations, and neutralization of threats through administrative overrides when principal user responses are insufficient. In certain embodiments, the security administrator module **122.**

According to certain embodiments, the verification module **114** may perform real-time contextual decision-making, for example by integrating contextual data relating to the suspicious activity to guide verification workflows. This contextual data can include, for example, the type of entity or asset associated with the suspicious activity, the IP address of the entity associated with the suspicious activity, behavioral history of the entity or asset associated with the suspicious activity, etc. For example, for the case in which the suspicious activity is in response to a human user-initiated action, the verification module **114** may utilize the contextual data to send prompts to the principal user that include focused details, such as focused details on unauthorized logins or privilege escalations. For cases in which the suspicious activity is in response to an action (or actions) that originated from a computerized entity, the verification module **114** may utilize the contextual data to send prompts to the principal user that provide insights, for example insights on API usage, configuration changes, unusual activity patterns, and the like.

In certain embodiments, the behavioral module **124** may be configured to perform behavioral analytics tasks and/or automation tasks. The behavioral analytics tasks may include some functions performed by a threat detection system, including, for example, flagging suspicious activities, for example using anomaly detection. In some embodiments, the automation tasks may include automated response based on the contextual data and role-specific inputs, thereby reducing principal user response times.

In certain embodiments, the system **10** may be integrated with cloud-native and/or IT infrastructure so as to support dynamic workload entity mapping (by the dynamic association module **118**) across both cloud-native and traditional environments. This integration with cloud and IT infrastructure leverages resource tagging, IAM policies, and configuration metadata to ensure comprehensive accountability across environments.

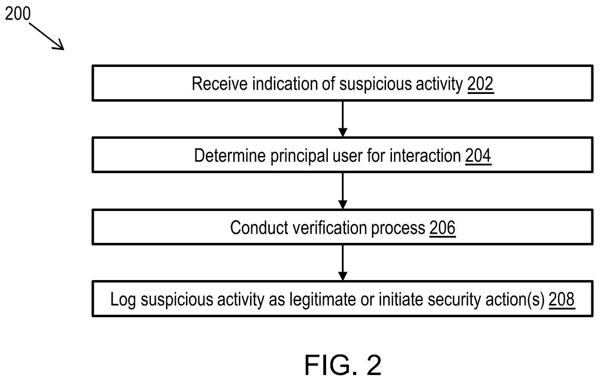

Attention is now directed to FIG. 2 which shows a flow diagram detailing a computer-implemented process **200** in accordance with embodiments of the disclosed subject matter. This computer-implemented process includes an algorithm for, among other things, real-time user interaction in an incident response system. Reference is also made to FIG. 1. The process and sub-processes of FIG. 2 are computerized processes performed by the system **10** including, for example, the CPU **102** and associated components, such as the activity indication module **110,** the principal user determination module **112,** the verification module **114,** the responsive action module **116,** the dynamic association module **118,** the security administrator module **122,** and the behavioral module **124.** The aforementioned processes and sub-processes are for example, performed automatically, but can be, for example, performed manually, and are performed, for example, in real time.

At step **202,** the system **10,** for example the activity indication module **110,** receives an indication of suspicious activity associated with a computerized asset. As discussed above, detection of the suspicious activity may be performed by a threat detection system, or by a component (module) of the system **10,** for the example the activity indication module **110** or the behavioral module **124.**

At step **204,** the system **10,** for example the principal user determination module **112,** determines a principal user for interaction, specifically for the purposes of conducting a verification process in regards to the suspicious activity.

At step **206,** the system **10,** for example the verification module **114,** conducts the verification process (through one or more verification channels **120**) with the determined principal user.

At step **208,** the system **10,** for example the responsive action module **116,** logs the suspicious activity as legitimate or initiates at least one security action, based on the verification process. The at least one security action can be a responsive workflow selected from a set of two workflows (one being an automated workflow and the other being a human-assisted workflow).

Expanding on step **204,** determination of the principal user may be based on, for example, the type of suspicious activity and/or the origination of the suspicious activity. For example, if the suspicious activity is a result of an action associated with the computerized asset that is initiated by a human user, the human user is determined to be the principal user. If, however, the suspicious activity is a result of an action associated with the computerized asset that originates from a computerized entity, a human user identified as being responsible for the computerized entity is determined to be the principal user. Here, step **204** may include at least one sub-step. The sub-step may be performed by the system **10,** for example by the dynamic association module **118,** and includes dynamically associating (via a mapping process) one or more computerized entities with one or more respective responsible users.

Non-limiting examples of activities that may trigger a threat detection system to classify such activities as suspicious have been provided above. Additional non-limiting examples of potentially suspicious activities that may be indicated at step **206,** and the associated principal user that may be determined at step **204,** are provided hereinbelow as follows:
1) A machine role invoking an API or APIs that was / were never previously invoked (and that invoking either succeeding or failing) - the principal user being, for example, the user responsible for the machine role (e.g., managing the configuration of the machine role), for example a developer, member of IT personnel, etc.
2) A human user having his / her privileges escalated (i.e., given higher permissions to perform more operations) - the principal user being the human user.
3) A machine (computer) having its privileges escalated - the principal user being, for example, the user responsible for the machine role (e.g., managing the configuration of the machine), for example a developer, member of IT personnel, system administrator, etc.
4) A container communicating with one or more of Tor network, C2S, Cryptos - the principal user being, for example, the user responsible for the container (e.g., managing the container's configuration), for example a DevOps team member or engineer.

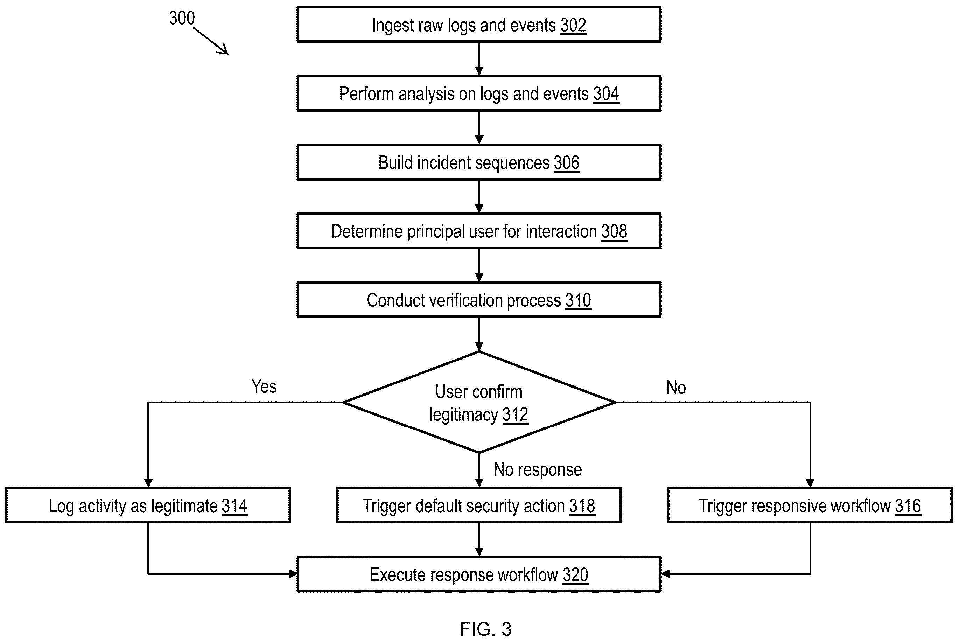

Attention is now directed to FIG. 3 which shows a flow diagram detailing another computer-implemented process **300** in accordance with embodiments of the disclosed subject matter. This computer-implemented process includes an algorithm for, among other things, providing security incident response. Reference is also made to FIGS. 1 and 2. The process and sub-processes of FIG. 3 are computerized processes. Most of the process and sub-processes of FIG. 3 are performed by the system **10** including, for example, the CPU **102** and associated components, such as the activity indication module **110,** the principal user determination module **112,** the verification module **114,** the responsive action module **116,** the dynamic association module **118,** the security administrator module **122,** and the behavioral module **124.** Other of the sub-processes of FIG. 3 may be performed by one or more systems that are connected to the system **10,** such as a threat detection system. The aforementioned processes and sub-processes are for example, performed automatically, but can be, for example, performed manually, and are performed, for example, in real time.

At step **302,** raw logs and events are ingested, for example by a threat detection system, in response to monitoring of computerized assets of an organization, enterprise, cloud or other similar environment. As discussed above, the threat detection system may be a part of the system **10** or may otherwise be associated with the system **10.**

At step **304,** analysis is performed on the raw logs and events to determine suspicious behavior (suspicious activities). In certain embodiments, step **304** may be performed by the threat detection system. In other embodiments, step **304** may be performed by one of the modules of the system **10,** such as the behavioral module **124.**

At step **306,** the incident sequences are built (constructed) from the determined suspicious behavior. The incident sequences define sequences of events relating to (i.e., leading to) the suspicious activity. In certain embodiments, step **306** may be performed by the threat detection system. In other embodiments, step **306** may be performed by one of the modules of the system **10,** such as the behavioral module **124.**

At step **308,** the system **10** determines a principal user for interaction, similar to as in step **204** of process **200.**

At step **310,** the system **10** conducts a verification process (through one or more verification channels **120**) with the determined principal user, similar to as in step **206** of process **200.**

At step **312,** the system **10** determines whether the principal user confirms (or denies) legitimacy of the suspicious activity, on the basis of the verification process.

If the principal user confirms the legitimacy of the suspicious activity, the process **300** moves from step **312** to step **314,** where the system **10,** for example the responsive action module **116,** logs or instructs another system (e.g., the threat detection system) to log the suspicious activity as legitimate. If the principal user responds that the suspicious activity is not legitimate, the process **300** moves from step **312** to step **316,** where a responsive workflow is triggered (which may be an automated workflow or a human-assisted workflow, as discussed above). If no response is received from the principal user within a predetermined period of time, the process **300** moves from step **312** to step **318,** where a default security action is triggered. This default security action may include, for example, disabling accounts, stopping processes, isolating automatic processes, isolating or quarantining workload entities, etc. From each of steps **314, 316,** and **318,** the process **300** then moves to step **320,** where one or more response workflow is executed by the system **10.** These response workflows may include execution of actions based on the step from which step **320** was reached. For example, if step **320** is reached from step **314,** the response workflow may include only logging the suspicious activity as legitimate. As another example, if step **320** is reached from step **316** or step **318,** the response workflow may include execution of the workflow triggered at step **316** or execution of the default security action triggered at step **318.**

In the foregoing description, the subdivision of the logic and logic functions performed by the various modules **110, 112, 114, 116, 118, 122, 124** has been described herein according to a functional subdivision. It should be noted however that these functions may be subdivided in any desired manner, for example a subdivision where one or more of them modules performs one or more of the functions. As an extreme example, a single module may be used to perform all functions.

Implementation of the method and/or system of embodiments of the disclosure can involve performing or completing selected tasks manually, automatically, or a combination thereof. Moreover, according to actual instrumentation and equipment of embodiments of the method and/or system of the disclosed subject matter, several selected tasks could be implemented by hardware, by software or by firmware or by a combination thereof using an operating system.

For example, hardware for performing selected tasks according to embodiments of the disclosure could be implemented as a chip or a circuit. As software, selected tasks according to embodiments of the disclosed subject matter could be implemented as a plurality of software instructions being executed by a computer using any suitable operating system. In an exemplary embodiment of the disclosure, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, non-transitory storage media such as a magnetic hard-disk and/or removable media, for storing instructions and/or data. Optionally, a network connection is provided as well. A display and/or a user input device such as a keyboard or mouse are optionally provided as well.

For example, any combination of one or more non-transitory computer readable (storage) medium(s) may be utilized in accordance with the above-listed embodiments of the present disclosure. A non-transitory computer readable (storage) medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random-access memory (RAM), a read-only memory (ROM), an erasable programmable read-only memory (EPROM or Flash memory), a portable compact disc read-only memory (CD- ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

As will be understood with reference to the paragraphs and the referenced drawings, provided above, various embodiments of computer-implemented methods are provided herein, some of which can be performed by various embodiments of apparatuses and systems described herein and some of which can be performed according to instructions stored in non-transitory computer-readable storage media described herein. Still, some embodiments of computer-implemented methods provided herein can be performed by other apparatuses or systems and can be performed according to instructions stored in computer-readable storage media other than that described herein, as will become apparent to those having skill in the art with reference to the embodiments described herein. Any reference to systems and computer-readable storage media with respect to the following computer-implemented methods is provided for explanatory purposes, and is not intended to limit any of such systems and any of such non-transitory computer-readable storage media with regard to embodiments of computer-implemented methods described above. Likewise, any reference to the following computer-implemented methods with respect to systems and computer-readable storage media is provided for explanatory purposes, and is not intended to limit any of such computer-implemented methods disclosed herein.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

The above-described methods including portions thereof can be performed by software, hardware and combinations thereof. These processes and portions thereof can be performed by computers, computer-type devices, workstations, processors, micro-processors, other electronic searching tools and memory and other non-transitory storage-type devices associated therewith. The processes and portions thereof can also be embodied in programmable non-transitory storage media, for example, compact discs (CDs) or other discs including magnetic, optical, etc., readable by a machine or the like, or other computer usable storage media, including magnetic, optical, or semiconductor storage, or other source of electronic signals.

The methods and systems, including components thereof, herein have been described with exemplary reference to specific hardware and software. The processes methods have been described as exemplary, whereby specific steps and their order can be omitted and/or changed by persons of ordinary skill in the art to reduce these embodiments to practice without undue experimentation. The methods and systems have been described in a manner sufficient to enable persons of ordinary skill in the art to readily adapt other hardware and software as may be needed to reduce any of the embodiments to practice without undue experimentation and using conventional techniques.

To the extent that the appended claims have been drafted without multiple dependencies, this has been done only to accommodate formal requirements in jurisdictions which do not allow such multiple dependencies. It should be noted that all possible combinations of features which would be implied by rendering the claims multiply dependent are explicitly envisaged and should be considered part of the invention.

Although the disclosed subject matter has been described in conjunction with specific embodiments thereof, it is evident that many alternatives, modifications, and variations will be apparent to those skilled in the art. Accordingly, it is intended to embrace all such alternatives, modifications and variations that fall within the spirit and broad scope of the appended claims.

## Claims

1. A method comprising:
receiving an indication of suspicious activity associated with a computerized asset;
determining a principal user for interaction,
wherein if the suspicious activity is a result of an action associated with the computerized asset that is initiated by a human user, the human user is determined to be the principal user, and
wherein if the suspicious activity is a result of an action associated with the computerized asset that originates from a computerized entity, a human user identified as being responsible for the computerized entity is determined to be the principal user, wherein identification of the human user responsible for the computerized entity is performed based on a mapping process that dynamically associates one or more computerized entities with one or more respective responsible users;
conducting, through one or more verification channels, a verification process with the determined principal user to assess legitimacy of the suspicious activity; and
based on the verification process, logging the suspicious activity as legitimate or initiating at least one security action.

2. The method of claim 1, further comprising: logging the suspicious activity as a cybersecurity incident.

3. The method of claim 1, wherein the at least one security action includes: escalating the suspicious activity to a cybersecurity incident responder for further review and action.

4. The method of claim 1, wherein the at least one security action includes one or more of: disabling accounts, stopping processes, isolating automated processes, or quarantining the computerized entity.

5. The method of claim 1, wherein conducting the verification process includes: sending a request to the determined principal user to verify whether the suspicious activity is legitimate, and responsive to sending the request, receiving from the determined principal user an indication of whether the suspicious activity is legitimate.

6. The method of claim 5, wherein a lack of reply from the determined principal user within a predetermined period of time after sending the request is defined as a denial from the determined principal user that the suspicious activity is legitimate.

7. The method of claim 1, wherein the one or more communication channels includes one or more of: email, chat platforms, or mobile applications.

8. The method of claim 1, further comprising: integrating contextual data to guide a workflow for performing the at least one action.

9. The method of claim 8, wherein the workflow includes an automated flow.

10. The method of claim 8, wherein the workflow includes a human-assisted flow.

11. The method of claim 1, wherein the action associated with the computerized asset that is initiated by a human user includes one or more of user logins or user access to resources.

12. The method of claim 1, wherein the computerized entity includes one or more of: automated processes, virtual machines, servers, container instances, or APIs.

13. A system comprising:
a non-transitory storage medium for storing computer components; and
a computerized processor for executing the computer components comprising:
an activity indication module configured to receive an indication of suspicious activity associated with a computerized asset,
a user determination module configured to determine a principal user for interaction,
wherein if the suspicious activity is a result of an action associated with the computerized asset that is initiated by a human user, the user determination module determines that the human user is the principal user, and
wherein if the suspicious activity is a result of an action associated with the computerized asset that originates from a computerized entity, the user determination module determines that a human user identified as being responsible for the computerized entity is determined to be the principal user, wherein identification of the human user responsible for the computerized entity is performed based on a mapping process that dynamically associates one or more computerized entities with one or more respective responsible users,
a verification module configured to conduct, through one or more verification channels, a verification process with the determined principal owner to assess legitimacy of the suspicious activity, and
a responsive action module configured to, based on the verification process, log the suspicious activity as legitimate or initiate at least one security action.

14. A method comprising:
receiving an indication of suspicious activity associated with a computerized asset;
determining a principal user for interaction,
wherein if the suspicious activity is a result of an action associated with the computerized asset that is initiated by a human user, the human user is determined to be the principal user, and
wherein if the suspicious activity is a result of an action associated with the computerized asset that originates from a computerized entity, a human user identified as being responsible for the computerized entity is determined to be the principal user;
conducting, through one or more verification channels, a verification process with the determined principal user to assess legitimacy of the suspicious activity; and
based on the verification process, logging the suspicious activity as legitimate or initiating a responsive workflow selected from a set of two workflows, wherein the set of two workflows includes an automated workflow and a human-assisted workflow.
